# EUROPEAN PATENT SPECIFICATION

(11) **EP 2 215 373 B1**
(45) Date of publication and mention of the grant of the patent: **25.06.2014**
(21) Application number: 08853520.8
(22) Date of filing: 25.11.2008
(51) Int. Cl.: F16B 37/02, F16B 37/04, F16B 37/08

(54) **SPEED NUT**
BLECHMUTTER
ÉCROU RAPIDE

(30) Priority: 29.11.2007 ES 200703222
(43) Date of publication of application: 11.08.2010
(73) Proprietor: ITW Metal Fasteners SL, 08205 Sabadell (Barcelona) (ES)
(72) Inventor: DIEZ HERRERA, Victor, E-08205 Sabadell Barcelona (ES)
(74) Representative: Canela Giménez, Teresa
(86) International application number: PCT/IB2008/003206
(87) International publication number: WO 2009/068959

(56) References cited:
- WO-A-98/20262
- GB-A- 322 413
- GB-A- 2 099 099
- US-A- 2 684 704
- US-A- 4 201 111
- US-A- 5 897 281

## Description

### SCOPE OF THE INVENTION

This invention pertains to a speed nut, of the type that is used to fasten sheets or panels, with the characteristic that it provides a reserve elastic action and has double threading to prevent over-tightening and that it incorporates a washer to improve the nut's contact surface.

### BACKGROUND

Especially with its extensive use of insulation panels and protective sheets or plates, the automotive industry has needed means of quickly attaching such parts. Moreover, the cladding of, for example, a coating to the bottom of a car body can be a complex and difficult task.

For this kind of nut, the procedure of the state of the art begins with a threaded screw or bolt that is fastened to a support plate on which the panel or heat shield to be attached is located. The nut is screwed onto the screw to match the surface of this panel. The nuts have a hexagonal outer shape to make it possible to use a specific pneumatic tightening tool or, if such a tool is not available, a nut wrench or open-end wrench of the appropriate size.

This is the case of the Spanish industrial models I0144504 and 10142806, which call for corresponding nuts in the shape of hexagonal bowls of different designs which essentially create a passage for the attachment nut whose threading locks in the segmented flanges that are arranged in a circle around a central hole through which said screw passes.

Another example of this kind of embodiment is found in European patent EP0970313, in which an elastic nut is formed by bending on itself a bridge facing toward the base of the nut and the flanges enclosing the screw, such that when the nut is attached to the bolt, there is a small amount of elastic play between the pressure of the bridge on the base of the nut and said flanges against the threading of the bolt. To operate exactly as it should, this embodiment requires that the length between the bridge and the edges of said flanges be equivalent to the pitch of the threading.

For speed nuts of this type, it can be stated in general that -- aside from the properties that are inherent in the nature of their materials such as stress resistance, the nut's hardness, its strength at elevated temperatures, and the cost of such nutsefforts to improve their performance currently relate to developing a better elastic response, which would translate into better performance of the nut in the presence of the vibrations/shocks that it will experience due, for example, vehicle vibrations, as well as easier installation.

Thus, to make these nuts simple to use, they often are situated in such a way that the user can, in a few steps, install each nut in its proper place. In addition, the current installation processes, which call for power tools that deliver an elevated tightening torque without effort on the part of the user, may occasionally cause problems when these kinds of nuts are installed, mainly due to over-tightening, which causes them to deteriorate, on occasion creating the danger that they may break or may suddenly and violently pop off and be hurled into the surrounding area.

Document GB2099099 discloses a nut with three layers (shanks) and a combination of two different threaded holes in the upper layers, one of them is flexible and formed by two opposed identical and flexible tongues, and the other one is rigid and formed with a single helical threaded profile. Additionally, this nut has detents and a narrowed diameter of both threaded holes relative to the diameter of the fastening screw in order to clamp the flanges forming the threaded holes against the threaded profile of the screw.

This result can be improved to obtain a better performance of the security moment in the tightening operation because a different threaded combination and profiles are achieved with the present invention. Other features can be added or omitted in order to implement an improved flexible speed nut and a flexible washer like those disclosed in the present invention.

The object of this invention is to ensure better performance in these regards, safety, simplicity of use, and a better response to variations in the optimum tightening of the nut. These and other advantages of this invention will emerge from the description of said invention.

### BRIEF EXPLANATION OF THE INVENTION

This invention describes a speed nut that is formed by three surfaces, a lower surface that is a coupling washer to be pressed against the panel or protective device to which it is attached, an intermediate or base surface, and a final surface that is formed by an arm which, folded back on itself, covers the center of the nut. These surfaces have central holes whose centers are vertically aligned.

The edge of the washer or lower surface is beveled upward, toward the nut, thus keeping it from rubbing against the protective device or panel to which it is attached.

The central or base surface has cuts that delimit feet that support said base on the body of the washer, thereby creating an elastic resistance to the deformation and tightening of the nut.

The nut of the invention has a double screw thread, which consists of the conventional thread of the surface or upper arm and of another thread that is present on the base surface. Both screw threads are created by means of cuts that produce independent flanges of different sizes which together form a helical outline that is designed to mate with the corresponding threading of the screw or bolt that will pass through said nut.

Rising from its base surface, the nut has corresponding vertical walls that are independent of one another and that form a hexagonal outline designed to fit a conventional nut wrench or specific pneumatic tool for tightening the nut of the invention with a hexagonal head.

With the elements that are present in the nut of the invention, the intended objects have been achieved, i.e., to provide an elastic speed nut that makes it possible to deal with the vibrations of the environment in which it is used, ensuring a better response to over-tightening due to the double threading, which makes it more difficult for the nut to break.

### BRIEF EXPLANATION OF THE DRAWINGS

To ensure better understanding, a sheaf of drawings is attached that illustrates the invention in one of its possible embodiments, whereby said drawings do not limit the scope, possibilities, or object of the invention.

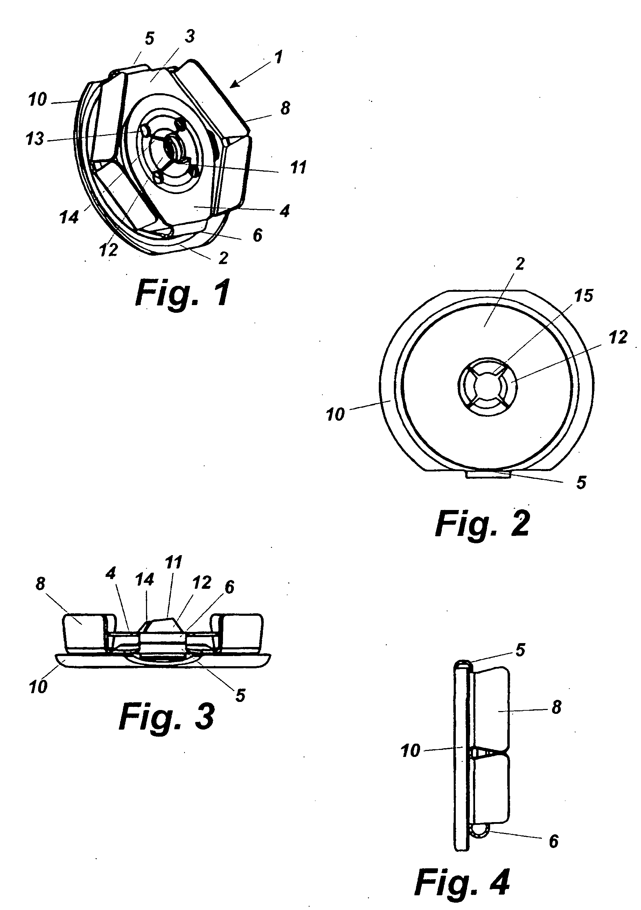

Figure 1 shows a perspective view of a speed nut according to this invention in its preferred embodiment.
Figure 2 is a bottom plan view of the nut of Figure 1.
Figure 3 is a front elevation view of the nut according to the previous figures.
Figure 4 shows a side view but with the nut of the previous figures rotated 90 degrees relative to the view of Figure 3.
Figure 5 shows a top view of the nut according to the preferred embodiment of the invention, while Figures 6 and 7 show corresponding cross-sections through this view.

### DETAILED EXPLANATION OF THE INVENTION

This invention pertains to a speed nut of the type that is used to attach protective covers and panels, whereby said nut is made from a laminar metal surface by stamping and deformation and whereby it is generally hexagonal in shape so that it can be used with a nut wrench; said nut is applied against a screw or bolt and compresses said protective cover.

Throughout this document, the superposed surfaces of the piece are referred to as follows for the sake of greater clarity: a base part or base, or base surface (3) that corresponds to the intermediate layer or surface, a lower washer (2), which is the layer or lower surface of the piece (1), and a flexible arm (4) that corresponds to the layer or upper surface.

The nut (1) has a base part, a flexible-arm part, and a part consisting of perimeter walls, whereby said parts have central holes through which said nut passes.

Said flexible-arm part has a hole with perimeter screw threading (11) that is designed to mate with the threading of said screw or bolt.

In addition, said speed nut (1) has a lower surface or washer (2) with perimeter edges (10) that are raised in the direction of the body of said nut (1), as well as a second thread (15) in said base surface (3) that is also designed to mate with said screw or bolt.

The design of the preferred embodiment of the invention is based on a steel plate which, stamped by conventional means, is bent by means of two folds (5 and 6) to produce three surfaces. The lower surface, which is said washer (2), is flat with a beveled perimeter edge to avoid damaging the protective cover to which it is attached.

The intermediate or base surface (3) of the speed nut (1) has four independent walls (8) that rise orthogonally from said base (3), together forming a hexagonal-finish nut that can be used both with specific pneumatic tightening tools and with conventional nut wrenches, as the case may be.

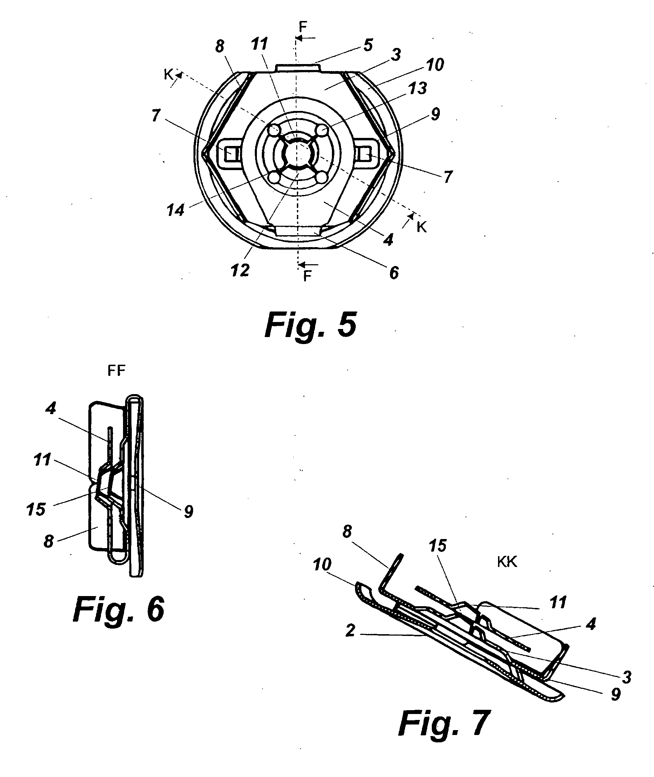

As the sections of Figures 6 and 7 show, in its central hole said base surface (3) has corresponding flanges (12) with a helical profile (15) that is designed to mate with the threading of the screw or bolt that runs through the nut.

There are some cuts (9) in the material of the base (3) that define feet (7) which, when bent downward, form an elastic gap with respect to said lower washer (2).

For its part, the upper edge has an arm (4) that extends over the body of the nut, also having a central hole whose center is vertically aligned with the corresponding centers of the lower surfaces (2 and 3), whereby said central hole has a helical threading (11) that is designed to mate with the threading of the screw or bolt.

Said threading (11) is created by means of corresponding independent flanges (12) of different sizes which, when arranged, together form a helical perimeter and four flanges (12) in the preferred embodiment of the invention, with circular separators (13) at the ends of their bases and cuts (14) that form their protruding sides.

Thus, with the speed nut of this invention, said washer (2) improves the contact surface between the protective cover and the speed nut (1). At the same time, the design of this invention represents an improved elastic response on the part of said nut (1). In addition to the elastic action of the upper arm (4), this speed nut (1) has both (a) feet (7) that act elastically on the base (3) and (b); the action, also elastic, of the different flanges (12) when it acts against the threading of the screw or bolt that passes through the nut.

In addition, the double thread of the nut of the invention, the built-in threading of the base surface (3) and the threading of the upper arm (4), do represent an improved mating of this kind of nut with the screw that passes through it.

The most direct result of this elastic performance on the part of the speed nut (1) according to this invention is, on the one hand, to keep the part from becoming accidentally unscrewed when it is affixed to a vehicle. In addition it is, thanks to the double threading, the increase in the failure torque of the screw (1), increasing the margin of safety in its use compared to the tightening torque employed to affix it.

It is understood that in the present case there can be variations such as details of the head and shape that do not alter the essence of the invention.

## Claims

1. SPEED NUT, of the type used to attach protective covers and panels, whereby said nut is made from laminar metal surface by means of stamping and deformation, whereby said nut is generally hexagonal in shape so that it can be used with a nut wrench, said nut comprises superposed surfaces (2, 3 and 4), connected to each other by folds (5, 6), with central aligned holes for passing a screw or bolt that compresses said protective cover, said nut having orifice threading (11, 15) in said upper holes that is designed to mate with the threading of said screw or bolt, **CHARACTERIZED in that** in said speed nut (1), it being made of three surfaces, the lower surface (2) is a washer having a beveled perimeter edge (10) that rises toward the body of said nut (1); said upper surfaces (3, 4) having said two threads (11 and 15), respectively, forming an approximately continuous helical threaded perimeter defined by flanges (12) that are independent and of different sizes, with circular separators (13) at the ends of their bases and cuts (14) that form their protruding sides.

2. SPEED NUT, according to claim 1, wherein four independent walls (8) rise orthogonally from said base (3), together forming a nut whose perimeter shape is approximately hexagonal.

3. SPEED NUT, according the preceding claims, wherein there are four of said flanges (12) in each of said surfaces, the base surface (3) and the upper arm surface (4).

4. SPEED NUT, according the preceding claims, whereby cuts (9) in the material of said base(3) define feet (7) which, folded downward, provide an elastic gap with respect to said lower washer (2).

## Patentansprüche

1. Klemmmutter der Art, die zum Anbringen von Schutzabdeckungen und -platten verwendet wird, wobei die Mutter mittels Stanzens und Deformierens aus einer laminaren Metallfläche hergestellt ist, wobei die Mutter eine allgemein hexagonale Form hat, so dass sie mit einem Mutternschlüssel verwendet werden kann, wobei die Mutter übereinanderliegende Flächen (2, 3 und 4) umfasst, die durch Falzen (5, 6) miteinander verbunden sind und mittige fluchtende Löcher zur Durchführung einer Schraube oder eines Bolzens haben, der bzw. die die Schutzabdeckung zusammendrückt, wobei die Mutter in den oberen Löchern ein Öffnungs gewinde (11, 15) hat, das dazu ausgelegt ist, mit dem Gewinde der Schraube oder des Bolzens zusammenzupassen, **dadurch gekennzeichnet, dass** die Klemmutter (1) aus drei Flächen hergestellt ist, wobei die untere Fläche (2) eine Unterlegscheibe ist, die einen Rand (10) mit einem abgefasten Umfang hat, der zum Körper der Mutter (1) hin ansteigt, wobei die oberen Flächen (3, 4) die beiden Gewinde (11 bzw. 15) haben, die einen ungefähr durchgehenden schraubenförmigen Gewindeumfang bilden, der durch Flansche (12) definiert ist, die unabhängig und unterschiedlich groß sind und an den Enden ihrer Basen kreisförmige Trenner (13) sowie Einschnitte (14) aufweisen, die ihre vorragenden Seiten bilden.

2. Klemmmutter nach Anspruch 1, wobei vier unabhängige Wande (8) orthogonal von der Basis (3) ansteigen und zusammen eine Mutter bilden, deren Umfang ungefähr hexagonal ist,

3. Klemmmutter nach den vorhergehenden Ansprüchen, wobei in den Flächen, der Basisfläche (3) und der oberen Armfläche (4) jeweils vier der Flansche (12) vorliegen.

4. Klemmmutter nach den vorhergehenden Ansprüche, wobei Einschnitte (9) im Material der Basis (3) Füße (7) definieren, die nach unten geklappt einen elastischen Spalt bezüglich der unteren Unterlegscheibe (2) bilden.

## Revendications

1. Ecrou rapide, du type utilisé pour attacher des panneaux et capots de protection, ledit écrou étant réalisé à partir d'une surface métallique laminaire par forgeage par pression et déformation, ledit écrou présentant une forme générale hexagonale de telle sorte qu'il puisse être utilisé avec une clé à écrou, ledit écrou comprenant des surfaces superposées (2, 3 et 4), raccordées les unes aux autres par des plis (5, 6), avec des trous centraux alignés permettant d'y faire passer une vis ou un boulon qui comprime ledit capot de protection, ledit écrou comportant un filetage d'orifice (11, 15) dans lesdits trous supérieurs qui est conçu pour s'accoupler avec le filetage de ladite vis ou dudit boulon,
**caractérisé en ce que** dans ledit écrou rapide (1) , celui-ci étant composé de trois surfaces, la surface inférieure (2) est une rondelle comportant un bord périmétrique chanfreiné (10) qui s'élève en direction du corps dudit écrou (1; lesdites surfaces supérieures (3, 4) comportant respectivement lesdits deux filets (11 et 15), formant un périmètre fileté hélicoidal approximativement continu défini par des ailettes (12) qui sont indépendantes et de différentes tailles, avec des séparateurs circulaires (13) aux extrémités de leurs bases et des entailles (14) qui forment leurs côtés saillants.

2. Ecrou rapide selon la revendication 1, dans lequel quatre parois indépendantes (8) s'élèvent de façon orthogonale à partir de ladite base (3), formant ensemble un écrou dont le périmètre présente une forme approximativement hexagonale.

3. Ecrou rapide selon les revendications précédentes, dans lequel quatre desdites ailettes (12) sont présentes dans chacune desdites surfaces, à savoir la surface de base (3) et la surface du bras supérieur (4).

4. Ecrou rapide selon les revendications précédentes, dans lequel des entailles (9) dans le matériau de ladite base (3) définissent des pattes (7) qui, lorsqu'elles sont pliées vers le bas, créent un espace élastique par rapport à ladite rondelle inférieure (2
